# EUROPEAN PATENT APPLICATION

(11) **EP 0 730 138 A1**
(43) Date of publication of application: **04.09.1996**
(21) Application number: 95300958.6
(22) Date of filing: 15.02.1995
(51) Int. Cl.: G01F 1/06, G01F 15/07, G01F 15/18

(54) **Water meter**

(71) Applicant: Kimmon Manufacturing Co., Ltd., Itabashi-ku, Tokyo (JP)
(72) Inventor: Onoda, Hajime, c/o Kimmon Manufacturing Co., Ltd., Tokyo (JP)
(74) Representative: Abbie, Andrew Kenneth

(57) **Abstract**

A water meter (1) comprises a lower structure (2) having an inlet opening (4) and an outlet opening (5) to be connected to water lines (26), respectively, and an upper structure (3) attachable to the lower structure (2), and having a calculation/indication unit (21) for calculating the flow rate of water flowing through the water lines (26), on the basis of the rotational speed of an impeller (20) rotated by the flow of water.

## Description

This invention relates to a water meter suitable for underground installation for, for example, preventing freezing.

In a district where it is highly possible that water meters are frozen in winter, they are generally buried deep below ground. More specifically, the water supply pipe, stop cock and meter, etc. of a water line are buried at a deeper level of the ground than the level to which they are frozen in winter, thereby preventing the water line from falling into a supply disable state or from rupturing due to freezing.

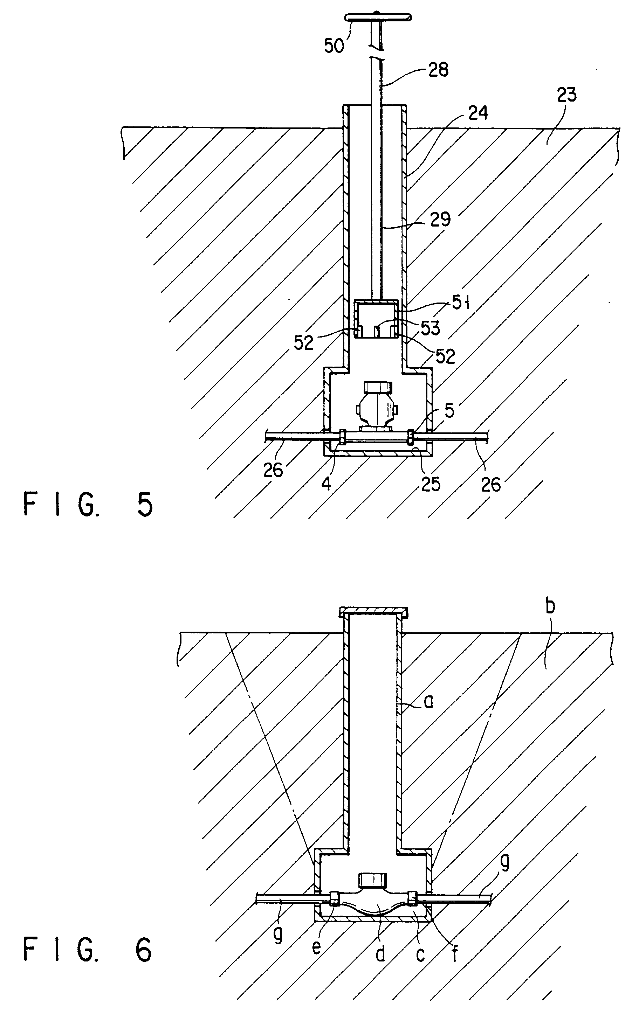

FIG. 6 shows a state in which a water meter is buried in the ground. In FIG. 6, reference sign a denotes a protection pipe buried in the ground b. The protection pipe a has an inner bottom portion c, on which a water meter d is placed. The water meter d has an inlet e and an outlet f connected to a water line g. The reading of the indication of the water meter d disposed as above is performed by using a remote-reading water meter as the water meter d and reading its indicator located above ground.

In this case, the water meter d is buried deep below ground (there is a district, for example, in which the underground installation depth exceeds 1.5 m). Therefore, to inspect the meter d being used or to exchange it with a new one, it is necessary to dig the soil h around the protection pipe a and raise up the meter d. This requires hard labor.

It is the object of the invention to provide a water meter whose maintenance work or exchange work can be performed with ease even when the meter is buried deep below ground.

To attain the object, there is provided a water meter characterized by comprising: a lower structure having an inlet opening and an outlet opening to be connected to water lines, respectively; and an upper structure attachable to the lower structure, and having an integrating flow unit for calculating the flow rate of water flowing through the water lines, on the basis of the rotational speed of an impeller rotated by the flow of water.

Since in the water meter constructed as above, the upper structure is detachably mounted on the lower structure, the upper structure can be detached from the lower structure even if the meter is buried deep below ground, which enables the maintenance work or exchange work to be easily performed without digging the ground. Thus, the water meter of the invention is easy to handle.

This invention can be more fully understood from the following detailed description when taken in conjunction with the accompanying drawings, in which:
FIG. 1 is a longitudinal cross sectional view, showing a water meter according to the invention;
FIG. 2 is an exploded view of the water meter shown in FIG. 1;
FIG. 3 is a plan view, showing an indicator section of the water meter shown in FIG. 1;
FIG. 4 is a perspective view, showing an essential part of a tool used to raise up the water meter of FIG. 1 from underground;
FIG. 5 is a cross sectional view, useful in explaining how to raise the water meter of FIG. 1 buried deep below ground with the use of a tool of FIG. 4; and
FIG. 6 is a cross sectional view, showing a state in which the conventional water meter is set.

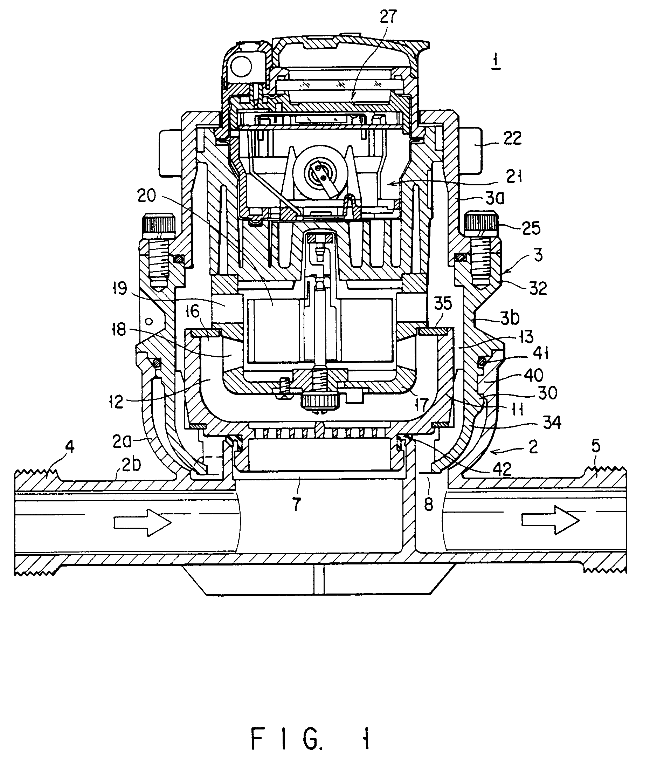

The embodiment of the invention will be explained with reference to the accompanying drawings. As is shown in FIG. 1, a water meter 1 according to the invention comprises an upper structure 3 and a lower structure 2.

The lower structure 2 has a cup-shaped connecting bore portion 2a and a tubular portion 2b formed integral with the connecting bore portion 2a as one body. The connecting bore portion 2a is located on a longitudinally-intermediate portion of the tubular portion 2b. The tubular portion 2b has an end serving as an inlet opening 4, and the other end serving as an outlet opening 5. The connecting bore portion 2a has an inlet passage 7 formed therein and communicating with the inlet opening 4, and an outlet passage 8 formed outside the inlet passage 7 and concentric with the same. The outlet passage 8 communicates with the outlet opening 5.

The upper structure 3 has a housing comprising an upper case 3a and a lower case 3b fitted to the case 3a by means of screws 25. The lower case 3b includes a connecting portion 32 connected to the upper case 3a, and a cup-shaped insertion portion 34 fitted in the connecting bore portion 2a of the lower structure 2. The insertion portion 34 is divided into an inlet line 12 and an outlet line 13 by means of a partition wall 11. The lines 12 and 13 open at a lower end portion of the insertion portion 34.

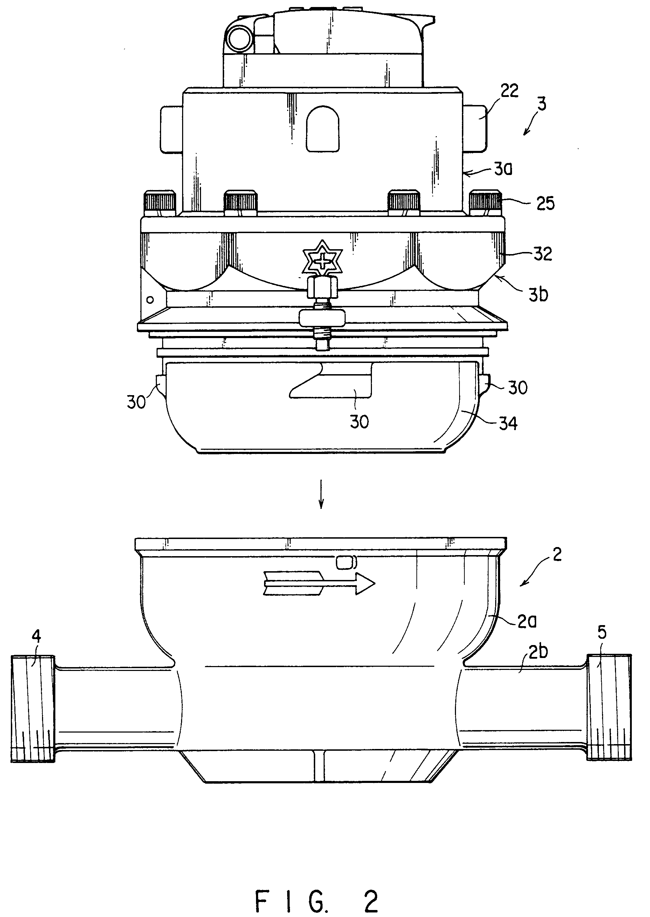

As is shown in FIG. 2, the insertion portion 34 of the lower case 3b is inserted into the connecting bore portion 2a of the lower structure 2 and rotated, thereby placing projections 30 formed on the outer periphery of the insertion portion 34, under projections 40 formed on the inner periphery of the connecting bore portion 2a. Thus, the upper structure 3 is coupled with the lower structure 2 in a reliable manner. In the state in which the upper and lower structures are coupled with each other, the clearances between the upper and lower structures 3 and 2 are reliably sealed by seal members 41 and 42, and the inlet line 12 and the outlet line 13 communicate with the inlet passage 7 and the outlet passage 8, respectively.

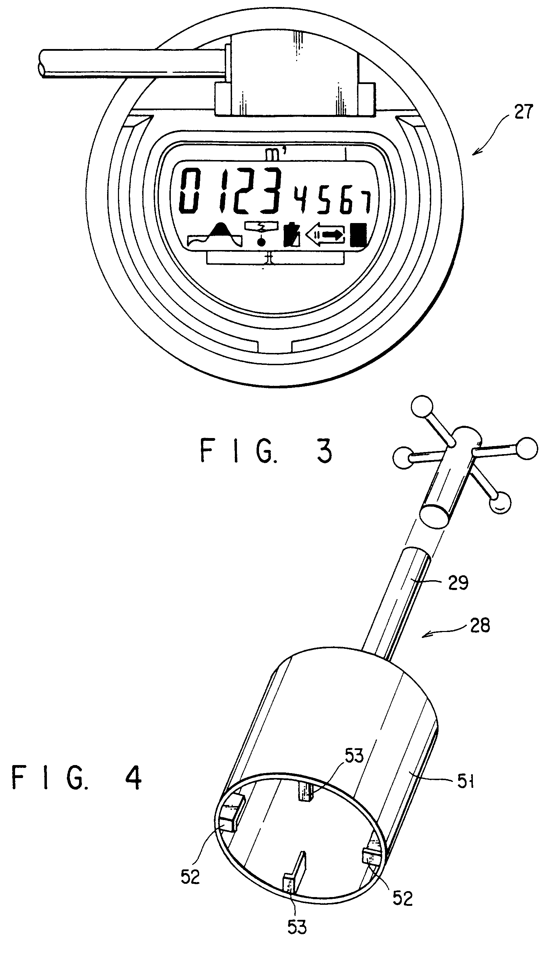

An opening 16 is formed in the partition wall 11, and receives therein an impeller case 17. The opening 16 is sealed by a seal member 35. The case 17 has a peripheral wall, in which inlet nozzles 18 communicating with the inlet line 12 and outlet nozzles 19 communicating with the outlet line 13 are formed. An impeller 20 is supported in the impeller case 17 such that it synchronizes with the operation of an integrating flow unit 21 located on the upper end of the impeller 20. In other words, the integrating flow unit 21 detects the revolutions or the rotational speed of the impeller 20 which is rotated by water flowing into the impeller case 17 through the inlet line 12, thereby calculating the flow of the water and displaying a digital value indicative of the flow. FIG. 3 shows the indicator of the integrating flow unit 21 in detail. A pair of engaging portions 22 to be engaged with a tool 28 as shown in FIG. 4, which will be explained later, project from the outer periphery of the upper case 3a of the upper structure 3.

As is shown in FIG. 5, for example, the water meter constructed as above is placed on an inner bottom surface 25 of a protector pipe 24 vertically buried in the ground 23, and has its inlet opening 4 and outlet opening 5 connected to water lines 26 extending in the ground 23. In this state, a value indicated by the indicator 27 of the integrating flow unit 21 can be read above ground with remote-measure cord.

To check the water meter placed in the ground or exchange the same with a new one, a tool 28 as shown in FIGS. 4 and 5 is used. The tool 28 has a main shaft 29, which has a handle 50 at its upper end and a cylindrical fitting case 51 at its lower end. First engaging chips 52 and second engaging chips 53, which can be engaged with the engaging portions 22 of the upper structure 3, project from the inner peripheral surface of the fitting case 51. The engaging chips 52 (or 53) are formed of L-shaped members arranged such that their short bent portions extend in circumferentially opposite directions. The chips 52 and 53 are located circumferentially alternately at regular intervals. The first engaging chips 52 are used to fasten the upper structure 3 to the lower structure 2, while the second engaging chips 53 are used to loosen the upper and lower structures 3 and 2 from each other.

Therefore, to check or exchange the water meter, the main cock of the water lines 26 is closed, and then the tool 28 is inserted into the protector pipe 24. The tool 28 has its fitting case 51 fitted on the upper structure 3, where the second engaging chips 53 of the fitting case 51 are engaged with the engaging portions 22 of the upper structure 3. Then, rotating the handle 50 of the tool 28 counterclockwise brings the projections 30 of the insertion portion 34 of the upper structure 3 out of contact with the projections 40 of the connecting bore portion 2a of the lower structure 2. As a result, the insertion potion 34 can be pulled from the connecting bore portion 2a, which means that the upper structure 3 can be separated from the lower structure 2. By raising up the tool 28, the upper structure 3 is raised out of the protector pipe 24. Thus, the upper structure 3 of the water meter can be checked above ground.

Further, to mount the upper structure 3 on the lower structure 2 after checking or to mount a new upper structure 3 on the lower structure 2, the checked upper structure 3 or a new upper structure 3 is inserted into the protector pipe 24, with the engaging portions 22 of the upper structure 3 engaged with the first engaging chips 52 of the tool 28. Then, the insertion portion 34 of the upper structure 3 is positioned in the connecting bore portion 2a of the lower structure 2, and the handle 50 is rotated clockwise, thereby vertically moving the projections 30 of the insertion portion 34 and the projections 40 of the connecting bore portion 2a to bring the projections 30 into contact with the projections 40, respectively. As a result, the upper and lower structures 3 and 2 are coupled with each other in a reliable manner.

Although in the embodiment, the engaging portions 22 consisting of projections and to be engaged with the tool 28 are formed on the outer peripheral wall of the upper structure 3, the invention may be modified such that the upper structure 3 has a hexagonal or octagonal outline, and a box nut which fits with the outline is provided in the tool 28, or such that a groove to be engaged with the tool 28 is formed in the outer peripheral wall of the structure 3.

Moreover, although in the embodiment, the upper structure 3 is just fitted into the lower structure 2, the upper structure 3 may be screwed into the lower structure 2. In this case, a male screw is provided on the outer surface of the insertion portion 34, and a female screw to be engaged with the male screw is provided in the inner surface of the connecting bore portion 2a.

## Claims

1. A water meter characterized by comprising:
a lower structure (2) having an inlet opening (4) and an outlet opening (5) to be connected to water lines (26), respectively; and
an upper structure (3) attachable to the lower structure (2), and having an integrating flow unit (21) for calculating the flow rate of water flowing through the water lines (26), on the basis of the revolutions or the rotational speed of an impeller (20) rotated by the flow of water.

2. A water meter characterized by comprising:
a lower structure (2) having an inlet opening (4) and an outlet opening (5) to be connected to water lines (26), respectively;
an upper structure (3) having an integrating flow unit (21) for calculating the flow rate of water flowing through the water lines (26), on the basis of the revolutions or the rotational speed of an impeller (20) rotated by the flow of water; and
engaging means for detachably engaging the upper structure (3) with the lower structure (2).

3. The water meter according to claim 2, characterized in that the engaging means includes a first engagement projection (30) formed on an outer surface portion of the upper structure (3) and a second engagement projection (40) formed on an inner surface portion of the lower structure (2) and to be engaged with the first engagement projection (30).

4. The water meter according to claim 3, characterized in that the first and second engagement projections (30, 40) are engaged with each other by rotating the upper structure (3) relative to the lower structure (2).

5. The water meter according to claim 2, characterized in that the engaging means includes a male screw portion formed on an outer surface portion of the upper structure (3), and a female screw portion formed in an inner surface portion of the lower structure (2) and to be engaged with the male screw portion.

6. The water meter according to any one of the preceding claims, characterized in that an engagement portion (22) to be engaged with a mounting tool (28) for mounting the upper structure (3) on the lower structure (2) is provided on an outer surface portion of the upper structure (3).

7. A water meter characterized by comprising:
a lower structure (2) including a tubular member (2b) having an inlet opening (4) and an outlet opening (5) to be connected to water lines (26), respectively, and a connecting bore portion (20) formed integral with the tubular member (2b) as one body and having an inlet passage (7) communicating with the inlet opening (4) and an outlet passage (8) communicating with the outlet opening (5);
an upper structure including an insertion portion (34) to be fitted into the connecting bore portion (2a) and having an inlet line (12) communicating with the inlet passage (7) and an outlet line (13) communicating with the outlet passage (8), an impeller (20) located in a chamber connecting the inlet line (12) to the outlet line (13) and being rotated by the flow of water flowing through the inlet line (12), and an integrating flow unit (21) for calculating the flow of water on the basis of the revolutions or the rotational speed of the impeller (20); and
engaging means for detachably engaging the upper structure (3) with the lower structure (2).

8. The water meter according to claim 7, characterized in that the outlet passage (8) is formed outside the inlet passage (7) and concentric therewith.

9. The water meter according to claim 7, characterized in that the engaging means includes a first engagement projection (30) formed on an outer surface portion of the insertion portion (34) of the upper structure (3) and a second engagement projection (40) formed on an inner surface portion of the connecting bore portion (2b) of the lower structure (2) and to be engaged with the first engagement projection (30).

10. The water meter according to claim 9, characterized in that the first and second engagement projections (30, 40) are engaged with each other by rotating the upper structure (3) relative to the lower structure (2).

11. The water meter according to claim 7, characterized in that the engaging means includes a male screw portion formed on an outer surface portion of the upper structure (3), and a female screw portion formed in an inner surface portion of the lower structure (2) and to be engaged with the male screw portion.

12. The water meter according to any one of claims 7 to 11, characterized in that an engagement portion (22) to be engaged with a mounting tool (28) for mounting the upper structure (3) on the lower structure (2) is provided on an outer surface portion of the upper structure (3).

13. A water meter placed on an inner bottom (25) of a protector pipe (24) buried in the ground, characterized by comprising:
a lower structure (2) having an inlet opening (4) and an outlet opening (5) to be connected to water lines (26) buried in the ground;
an upper structure (3) having an integrating flow unit (21) for calculating the flow rate of water on the basis of the revolutions or the rotational speed of an impeller (20) rotated by the flow of water;
engaging means for detachably mounting the upper structure (3) on the lower structure (2); and
an engagement portion (22) formed on an outer surface portion of the upper structure (3) and to be engaged with a mounting tool (28) which is inserted into the protector pipe (24) from above for mounting the upper structure (3) on the lower structure (2).

14. The water meter according to claim 13, characterized in that the engaging means includes a first engagement projection (30) formed on an outer surface portion of the upper structure (3) and a second engagement projection (40) formed on an inner surface portion of the lower structure (2) and to be engaged with the first engagement projection (30).

15. The water meter according to claim 14, characterized in that the first and second engagement projections (30, 40) are engaged with each other by rotating the upper structure (3) relative to the lower structure (2).

16. The water meter according to claim 13, characterized in that the engaging means includes a male screw portion formed on an outer surface portion of the upper structure (3), and a female screw portion formed in an inner surface portion of the lower structure (2) and to be engaged with the male screw portion.

17. The water meter according to claim 13, 14 or 15, characterized in that the engagement portion (22) is formed on an outer surface portion of the upper structure (3) such that the upper structure (3) can be rotated relative to the lower structure (2) by the mounting tool (28) engaged with the engagement portion (22).

18. A water meter comprising a first structure having an inlet and an outlet adapted to be connected to respective water pipes, and a second structure releasably attachable to said first structure and including a flow measuring means for measuring flow between said inlet and outlet.
